# EUROPEAN PATENT APPLICATION

(11) **EP 4 088 601 A1**
(43) Date of publication of application: **16.11.2022**
(21) Application number: 21738939.4
(22) Date of filing: 10.01.2021
(51) Int. Cl.: A24F 40/57, A24F 47/00, A24F 40/46, A24B 15/22

(54) **AEROSOL GENERATING DEVICE**

(30) Priority: 10.01.2020 CN 202020065498 U
(71) Applicant: Shenzhen First Union Technology Co., Ltd., Shenzhen, Guangdong 518000 (CN)
(72) Inventor: YU, Peixia, Shenzhen, Guangdong 518000 (CN); LI, Yinzhe, Shenzhen, Guangdong 518000 (CN); FANG, Xiaogang, Shenzhen, Guangdong 518000 (CN); HU, Ruilong, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2021/071000
(87) International publication number: WO 2021/139805

(57) **Abstract**

The present application provides an aerosol generating device which comprises: a cavity, being configured to receive a smokable material; a heater, being configured to extend along the axial direction of the cavity and at least partially surround the cavity, and being configured to heat the smokable material received in the cavity; a temperature sensor, being kept in the cavity, and being configured to be inserted into the smokable material when the smokable material is received in the cavity to sense the temperature of the smokable material. By adopting the aforesaid aerosol generating device in which the temperature sensor is arranged in the cavity and is capable of being inserted into the smokable material to directly detect the temperature of the smokable material, it is convenient to control the temperature in the heating process and the temperature monitoring in the smoking process is more accurate.

## Description

### CROSS-REFERENCE TO RELATED APPLICATIONS

The present application claims priority to Chinese Patent Application No. 202020065498.0, filed with the Chinese Patent Office on January 10, 2020, titled "AEROSOL GENERATING DEVICE", the entire contents of which are incorporated herein by reference.

### TECHNICAL FIELD

Embodiments of the present application relate to the technical field of smoking sets which are noncombustible when being heated, and in particular, relate to an aerosol generating device.

### BACKGROUND

Tobacco products (e.g., cigarettes, cigars, etc.) burn tobacco to produce tobacco smoke during use. Attempts have been made to replace these tobacco-burning products by manufacturing products that release compounds without burning.

An example of such products is a heating device, which release compounds by heating instead of burning a material. For example, the material may be tobacco or other non-tobacco products, and these non-tobacco products may or may not contain nicotine. As an example of a known heating device, a heater is adopted to heat tobacco products, and the temperature of the heater itself is measured by the resistance temperature coefficient of a temperature sensor or the heater in the heating process so as to acquire the temperature condition in the heating process and control the heating process. As known in the prior art, when the heating process is controlled by measuring the temperature of the heater , there are errors or change lag between the temperature of the heater and the temperature of the tobacco products heated in the actual smoking process, which affects the accurate control of smoke output in the smoking process.

### SUMMARY

An objective of embodiments of the present application is to provide an aerosol generating device, so as to solve the problem of errors or change lag in temperature monitoring for the prior art.

Based on the above problem, the aerosol generating device provided according to an embodiment of the present application is used for heating a smokable material to generate aerosol for inhalation and comprises a housing; wherein the housing is provided therein with: a cavity, being configured to receive a smokable material; a heater, being configured to extend along the axial direction of the cavity and at least partially surround the cavity, and being configured to heat the smokable material received in the cavity; a temperature sensor, being kept in the cavity and being configured to be inserted into the smokable material when the smokable material is received in the cavity so as to sense the temperature of the smokable material.

In a preferred embodiment, the aerosol generating device further comprises a bracket, wherein the bracket is configured in the shape of a pin or a blade extending at least partially along the axial direction of the cavity and is configured to be inserted into the smokable material when the smokable material is received in the cavity; the temperature sensor is held on the bracket, so that the temperature sensor is inserted into the smokable material while it is held on the bracket.

In a preferred embodiment, the bracket has a tip located in the cavity, and the temperature sensor is held at the tip.

In a preferred embodiment, the temperature sensor is configured in the shape of a pin or a blade extending along the axial direction of the cavity, so that the temperature sensor is inserted into the smokable material when the smokable material is received in the cavity.

In a preferred embodiment, the temperature sensor comprises: a rigid substrate, being configured in the shape of a pin or a blade extending along the axial direction of the cavity, and being configured to be inserted into the smokable material when the smokable material is received in the cavity; a conductive trace formed on the rigid substrate, the conductive trace having a positive or negative temperature coefficient of resistance, so that it is possible to determine the temperature of the smokable material by measuring and using the resistance value of the conductive trace.

In a preferred embodiment, the heater is an infrared emitter that heats the smokable material by radiating infrared rays to the cavity.

In a preferred embodiment, the heater is a resistive heater or an electromagnetic inductive heater.

In a preferred embodiment, the bracket is further provided thereon with a plurality of supporting parts extending along the radial direction, and the bracket is stably kept in the housing through the supporting parts.

In a preferred embodiment, the cavity has a first end and a second end which are opposite to each other; wherein the smokable material is capable of being removably received in the cavity through the first end; a fixing seat is provided in the housing, and the fixing seat is configured to stop the movement of the smokable material received in the cavity at the second end; the fixing seat is provided with a through via penetrating along the axial direction of the cavity; the supporting parts are at least partially accommodated in the through via, and the end facing away from the bracket in the radial direction abuts against the inner surface of the through via, so that the bracket is stably kept in the housing.

In a preferred embodiment, the housing comprises a proximal end and a distal end which are opposite along the length direction; wherein the proximal end is provided with a receiving hole through which the smokable material is capable of being received in or removed from the cavity; the distal end is provided with an air inlet for outside air to enter the housing; the through via of the fixing seat is in airflow communication with the air inlet; the space between the supporting parts forms an airflow channel for outside air to enter the cavity from the through via.

By adopting the aerosol generating device described above in which the temperature sensor is arranged in the cavity and is capable of being inserted into the smokable material to directly detect the temperature of the smokable material, it is convenient to control the temperature in the heating process and the temperature monitoring in the smoking process is more accurate.

### BRIEF DESCRIPTION OF THE DRAWINGS

One or more embodiments are illustrated by pictures in corresponding attached drawings, and this does not constitute limitation on the embodiments. Elements with the same reference numerals in the attached drawings are shown as similar elements, and the pictures in the attached drawings do not constitute scale limitation unless otherwise stated specifically.
FIG 1 is a schematic view of an aerosol generating device in use provided according to an embodiment.
FIG. 2 is a schematic view of the aerosol generating device in FIG. 1 from another viewing angle.
FIG. 3 is a schematic view illustrating the internal structure of the aerosol generating device in FIG. 1.
FIG. 4 is a schematic cross-sectional view of the aerosol generating device in FIG. 3 taken along the width direction.
FIG. 5 is a schematic cross-sectional view of a heating mechanism in FIG. 4.
FIG. 6 is an exploded schematic view of the heating mechanism in FIG. 5.
FIG. 7 is a schematic view of a bracket in FIG. 6 assembled in a lower fixing seat.
FIG. 8 is a perspective cross-sectional view of the heating mechanism in FIG. 4.
FIG. 9 is a schematic structural diagram of a temperature sensor provided according to another embodiment.
FIG. 10 is a schematic view of the temperature sensor in FIG. 9 after installation.
FIG. 11 is a schematic structural diagram of a temperature sensor provided according to yet another embodiment.

### DETAILED DESCRIPTION

In order to make the objectives, technical solutions and advantages of the embodiments of the present application clearer, the technical solutions in the embodiments of the present application will be clearly and completely described below with reference to the attached drawings in the embodiments of the present application. Obviously, the embodiments described are only part but not all of the embodiments of the present application. It shall be appreciated that, the specific embodiments described herein are only used for explaining the present application, and are not intended to limit the present application. Based on the embodiments in the present application, all other embodiments obtained by those of ordinary skill in the art without creative labor belong to the scope claimed in the present application.

It shall be noted that, when an element is expressed as "fixed to" another element, it may be directly on another element, or there may be one or more intervening elements therebetween. When an element is expressed as "connected" to another element, it may be directly connected to another element, or there may be one or more intervening elements therebetween. Terms such as "vertical", "horizontal", "left", "right" and other similar expressions used in this specification are for illustration purposes only.

In addition, technical features involved in various embodiments of the present application described below can be combined with each other as long as they do not conflict with each other.

An embodiment of the present application provides an aerosol generating device for heating instead of burning a smokable material, such as cigarettes, so as to volatilize or release at least one component of the smokable material to form aerosol for inhalation.

Based on a preferred embodiment, the aerosol generating device heats the smokable material by radiating far infrared rays with the heating effect e.g., far infrared rays of 3 µm to 15 µm. When the wavelength of the infrared rays matches the absorption wavelength of the volatile component of the smokable material during use, the energy of the infrared rays is easily absorbed by the smokable material, and then the smokable material is heated to volatilize at least one volatile component thereof to generate aerosol for inhalation.

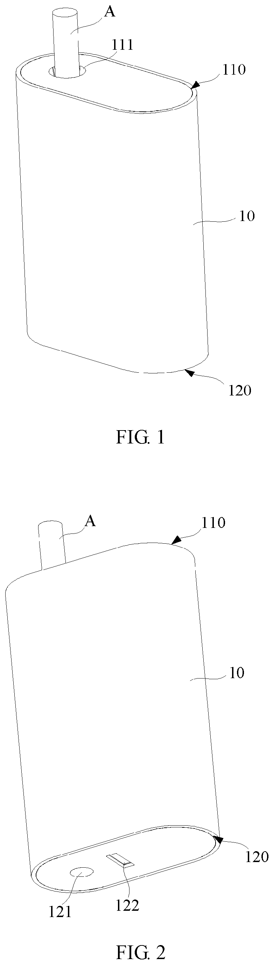

Reference may be made to FIG. 1 to FIG. 2 for the structure of an aerosol generating device according to an embodiment of the present application. The overall shape of the device is generally configured in a flat cylinder shape, and external components of the aerosol generating device include: a housing 10, the interior of which is hollow to form an assembly space for accommodating necessary functional components such as infrared radiation; the housing 10 has a proximal end 110 and a distal end 120 which are opposite along the length direction; wherein the proximal end 110 is provided with a receiving hole 111 through which the smokable material A can be received in the housing 10 to be heated or removed from the housing 10; the distal end 120 is provided with an air inlet 121 and a charging interface 122; the air inlet 121 is used to allow outside air to enter the housing 10 during smoking; and the charging interface 122, such as a USB type-C interface, a Pin type interface or the like, is used for charging the aerosol generating device by being connected to an external power supply or adapter.

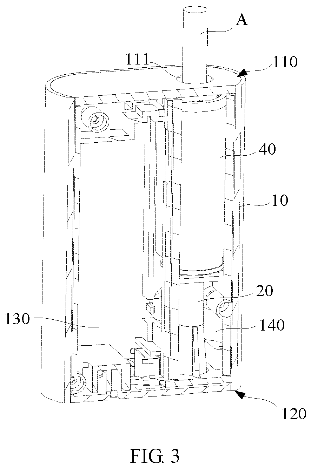

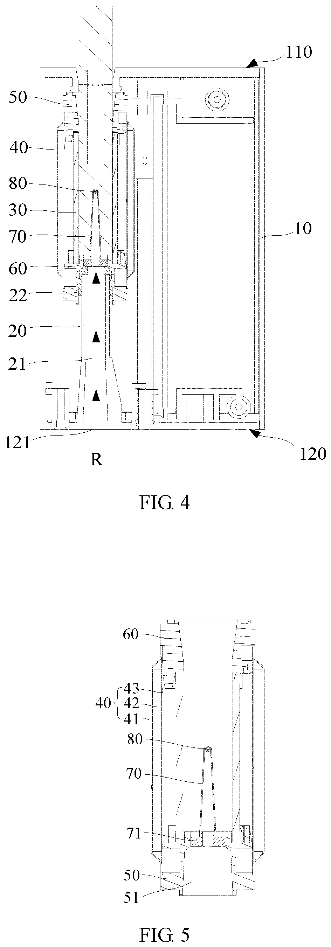

Further speaking, the internal structure of the housing 10 is as shown in FIG. 3 and FIG. 4, and it comprises a first compartment 130 and a second compartment 140 which are sequentially arranged in the width direction. The first compartment 130 is an installation space for installing electronic devices such as electrical cores and circuit boards (not shown in the figure), while the second compartment 140 is an installation space for installing and holding a heating mechanism.

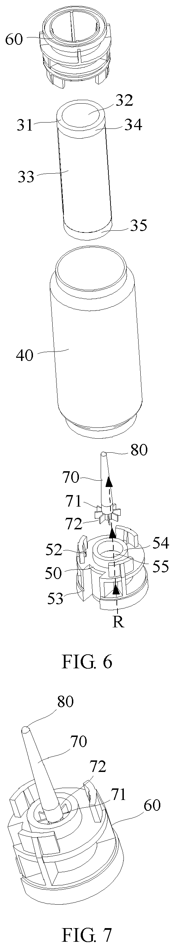

Further referring to FIG. 4 and FIG. 5, the perspective structure of an infrared emitter 30 arranged in the second compartment 140 along the length direction of the housing 10 may be as shown in FIG. 6; wherein the infrared emitter 30 comprises: a tubular base 31, which, as a rigid carrier and an object containing the smokable material A, may be made of high-temperature resistant and infrared-transmitting materials such as quartz glass, ceramics or mica in an embodiment; the tubular base 31 is preferably made of a transparent material, for example, a high-temperature resistant material with infrared transmittance above 95%; and the interior space of the tubular base 31 forms a cavity 32 for containing and heating the smokable material A; an infrared emission coating 33 formed on at least a part of the outer surface of the tubular base 31, wherein the infrared emission coating 33 is an electro-infrared emission coating, and it can generate heat by itself when energized and radiate infrared rays which can be used to heat the smokable material A, such as the above-mentioned far infrared rays of 3µm to 15 µm, to the smokable material received in the cavity 32. When the wavelength of the infrared rays matches the absorption wavelength of the volatile component of the smokable material A, the energy of infrared rays is easily absorbed by the smokable material A.

In a common embodiment, the infrared emission coating 33 may be a coating made of ceramic-based materials such as zirconium, or Fe-Mn-Cu-based materials, tungsten-based materials, or transition metals and oxides thereof.

In a preferred embodiment, the infrared emission coating 33 is preferably composed of oxides of at least one metal element such as Mg, Al, Ti, Zr, Mn, Fe, Co, Ni, Cu, Cr or the like. These metal oxides will radiate the above-mentioned far infrared rays with the heating effect when heated to a proper temperature. Preferably, the thickness of the infrared emission coating 33 may be controlled to be 30 µm to 50 µm. The infrared emission coating 33 may be formed on the surface of the base 31 by spraying the oxides of the above metal elements on the outer surface of the base 31 by atmospheric plasma spraying and then curing the oxides.

In other variant embodiments, the infrared emission coating 33may also be formed on the inner surface of the base 31.

The infrared emitter 30 further comprises a first conductive coating 34 and a second conductive coating 35 respectively formed on at least a part of the outer surfaces of the opposite ends of the infrared emission coating 33. According to the preferred embodiment shown in FIG. 7, the first conductive coating 34 and the second conductive coating 35 are both annular in shape and are in contact with the infrared emission coating 33. During use, the first conductive coating 34 and the second conductive coating 35 may be electrically connected to the anode and cathode of a power supply respectively, so that the infrared emission coating 33 generates heat electrically and radiates infrared rays. The first conductive coating 34 and the second conductive coating 35 may be conductive coatings formed by dipping or coating, and usually, the first conductive coating 34 and the second conductive coating 35 may comprise silver, gold, palladium, platinum, copper, nickel, molybdenum, tungsten, niobium or metals or alloys thereof.

Further referring to FIG. 4 and FIG. 5, the heating mechanism further comprises a heat insulator 40 located outside the infrared emitter 30 in the radial direction, the heat insulator 40 is tubular in shape and comprises an inner tube wall 43 and an outer tube wall 41 which are sequentially arranged from inside to outside in the radial direction, and a central area 42 located between the inner tube wall 43 and the outer tube wall 41. In an embodiment, the inner tube wall 43 and the outer tube wall 41 may be made of rigid materials, such as stainless steel, ceramic, PPEK or the like, and the pressure of the central area 42 is configured to be lower than the pressure outside the heat insulator 40. That is, the central area 42 has or forms a certain degree of vacuum so as to reduce the radial outward conduction of the heat generated by the infrared emitter 30 in operation.

Further referring to the embodiment shown in FIG. 4, in the embodiment, the second compartment 140 is further provided therein with a tubular element 20 located in front of the heating mechanism and the air inlet 122 along the length direction, and the tubular element 20 is used to enable airflow communication between the cavity 32 and the air inlet 122 during smoking. As shown by an arrow R in FIG. 4, during smoking, the outside air enters the housing 10 through the air inlet 122, enters the cavity 32 through the inner hollow space 21 of the tubular element 20, and then passes through the smokable material A to be inhaled by the user.

At the same time, further referring to FIG. 4, the inner diameter of the inner hollow space 21 of the above-mentioned tubular element 20 is not constant, but has a portion 211 that gradually decreases along the direction from the air inlet 122 to the cavity 32.

Further referring to FIG. 4 to FIG. 6, in order to ensure the stable fixation of the infrared emitter 30 and the heat insulator 40 in the housing 10, and to provide support for the smokable material A so that the smokable material A is fixedly kept in the cavity 32, the housing 10 is further provided therein with an upper fixing seat 60 and a lower fixing seat 50. Both the upper fixing seat 60 and the lower fixing seat 50 are generally designed in a hollow annular shape.

The lower surface of the lower fixing seat 50 is provided with an insertion groove 51, and the upper end of the tubular element 20 is inserted into the insertion groove 51, so that the lower fixing seat 50 itself is stably supported and kept in the housing 10. At the same time, in order to ensure the airtightness and bonding stability after the tubular element 20 is inserted into the insertion groove 51, a silica gel seal ring 22 is provided at the joint of the insertion groove 51 and the tubular element 20.

As further shown in FIG. 4 to FIG. 6, the insertion groove 51 is a cylindrical space coaxial with the hollow space of the lower fixing seat 50, and the diameter of the insertion groove 51 is larger than that of the middle hole 55 of the lower fixing seat 50, so that the upper end of the tubular element 20 abuts against the insertion groove 51.

At the same time, the lower fixing seat 50 is further provided thereon with a first holding part 52, a second holding part 53 and a fourth holding part 54 respectively for the infrared emitter 30, the heat insulator 40 and the smokable material A to abut against, thereby supporting the infrared emitter 30, the heat insulator 40 and the smokable material A. In this way, the infrared emitter 30, the heat insulator 40 and the smokable material A are stably kept in the housing 10.

As can be further seen from the above description, the fourth holding part 54 described above is in the shape of a convex ring protruding into the cavity 32, and is configured to form a portion with a reduced inner diameter of the cavity 32, so that the smokable material A abuts against the fourth holding part 54 to stop the movement thereof.

Moreover, the corresponding upper fixing seat 60 is used for supporting and stably fixing the upper ends of the infrared emitter 30 and the heat insulator 40.

Further referring to FIG. 4 to FIG. 8, the device further comprises a temperature sensor 80 disposed in the cavity 32 of the infrared emitter 30, and the temperature sensor 80 is fixed at the tip of a pin or blade-shaped bracket 70, so that when the smokable material A is received in the cavity 32, the pin or blade-shaped bracket 70 and the temperature sensor 80 may be inserted into the smokable material A. In this way, the temperature sensor 80 can sense the temperature of the smokable material A, so that it is convenient to adjust the power of the infrared emitter 30 subsequently according to the sensed temperature of the smokable material A so as to keep the temperature at a preset optimum value during the smoking process.

According to the preferred embodiment shown in FIG. 6 to FIG. 8, a position on the surface of the bracket 70 that is close to the lower end is further provided with a plurality of supporting pieces 71 extending radially, and the supporting pieces 71 abut against the inner surface of the middle hole 55 of the lower fixing seat 50 in the radial direction in a way of interference or tight fit (which is certainly preferred), so that the bracket 70 is stably held in the lower fixing seat 50.

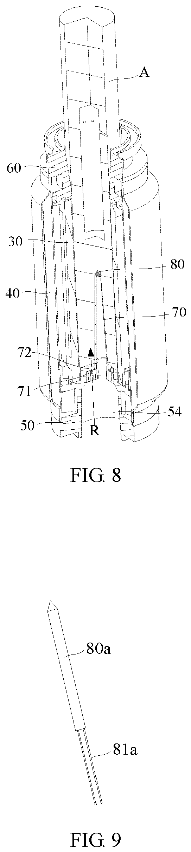

Meanwhile, further referring to FIG. 6 to FIG. 8, there are gaps between adjacent supporting pieces 71, and the gaps form channels 72 through which airflow passes. In this way, the air in the tubular element 20 can enter the cavity 32 through these channels 72, as specifically shown by the arrow R in FIG. 6 and FIG. 8.

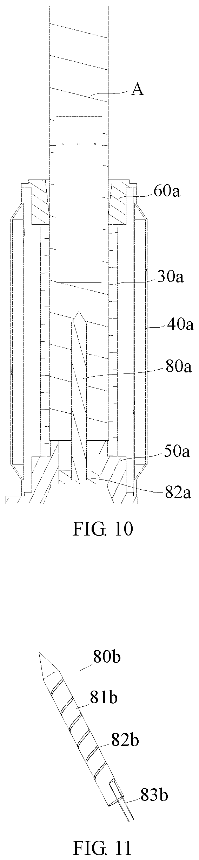

In yet another alternative embodiment, referring to FIG. 9 and FIG. 10, the rigid thermocouple type temperature sensor 80a which may be produced in a customized way is in the shape of a pin or blade, and the temperature sensor 80a itself may be easily inserted into the smokable material A and detect the temperature of the smokable material A. Of course, in order to facilitate the electrical connection and fixation of the customized temperature sensor 80a, it may be fixed by a support seat 82a to keep it stable; and the temperature sensor 80a itself further has elongated conductive pins 81a, which facilitates the electrical connection thereof.

Or in yet another alternative embodiment, the structure shown in FIG. 11 may be adopted for the temperature sensor 80b that detects the smokable material A, and the structure comprises: a rigid substrate 81b in the shape of a pin or blade, for being inserted into the smokable material A; a conductive trace 82b formed on the surface of the rigid substrate 81b, wherein the conductive trace 82b is made of a material with positive or negative temperature coefficient of resistance, so that when the rigid substrate 81b is inserted into the smokable material A, the conductive trace 82b is in thermal conduction contact with the smokable material A, and the temperature may be kept consistent by receiving heat from the smokable material A. Then, the resistance value of the conductive trace 82b is detected by a pin 83b, and thus the temperature of the conductive trace 82b and the smokable material A may be determined by the resistance value of 82b.

In the above description, the infrared emitter 30/30a is configured to heat the smokable material A by radiating infrared rays. However, in other variant embodiments, a resistive heater or an electromagnetic inductive heater having a tubular shape similar to that of the infrared emitter 30/30a described above may be adopted to heat the smokable material A.

By adopting the aforesaid aerosol generating device in which the temperature sensor 80/80a/80b is arranged in the cavity and is capable of being inserted into the smokable material A to directly detect the temperature of the smokable material A, it is convenient to control the temperature in the heating process and the temperature monitoring in the smoking process is more accurate.

It shall be noted that, the specification and attached drawings of the present application show preferred embodiments of the present application. However, the present application is not limited to the embodiments described in this specification. Further speaking, those of ordinary skill in the art can make improvements or variations according to the above description, and all these improvements and variations shall fall within the scope claimed in the appended claims of the present application.

## Claims

1. An aerosol generating device for heating a smokable material to generate aerosol for inhalation and comprising a housing; **characterized in that**, the housing being provided therein with:
a cavity, being configured to receive a smokable material;
a heater, being configured to extend along the axial direction of the cavity and at least partially surround the cavity, and being configured to heat the smokable material received in the cavity;
a temperature sensor, being kept in the cavity and being capable of being inserted into the smokable material when the smokable material is received in the cavity, thereby sensing the temperature of the smokable material.

2. The aerosol generating device according to Claim 1, **characterized in that**, further comprising a bracket, wherein the bracket is configured in the shape of a pin or a blade extending at least partially along the axial direction of the cavity, and is configured to be inserted into the smokable material when the smokable material is received in the cavity;
the temperature sensor is held on the bracket, so that the temperature sensor is inserted into the smokable material while it is held on the bracket.

3. The aerosol generating device according to Claim 2, **characterized in that**, the bracket has a tip located in the cavity, and the temperature sensor is held at the tip.

4. The aerosol generating device according to Claim 1, **characterized in that**, the temperature sensor is in the shape of a pin or a blade extending along the axial direction of the cavity, so that the temperature sensor is capable of being inserted into the smokable material when the smokable material is received in the cavity.

5. The aerosol generating device according to Claim 1, **characterized in that**, the temperature sensor comprises:
a rigid substrate, being configured in the shape of a pin or a blade extending along the axial direction of the cavity, and being configured to be inserted into the smokable material when the smokable material is received in the cavity;
a conductive trace formed on the rigid substrate, the conductive trace having a positive or negative temperature coefficient of resistance, so that it is possible to determine the temperature of the smokable material by measuring and using the resistance value of the conductive trace.

6. The aerosol generating device according to any of Claims 1 to 5, **characterized in that**, the heater is an infrared emitter that heats the smokable material by radiating infrared rays to the cavity.

7. The aerosol generating device according to any of Claims 1 to 5, **characterized in that**, the heater is a resistive heater or an electromagnetic inductive heater.

8. The aerosol generating device according to Claim 2 or 3, **characterized in that**, the bracket is further provided thereon with a plurality of supporting parts extending along the radial direction, and the bracket is stably kept in the housing through the supporting parts.

9. The aerosol generating device according to Claim 8, **characterized in that**, the cavity has a first end and a second end which are opposite to each other; wherein
the smokable material is capable of being removably received in the cavity through the first end;
a fixing seat is provided in the housing, and the fixing seat is configured to stop the movement of the smokable material received in the cavity at the second end;
the fixing seat is provided with a through via penetrating along the axial direction of the cavity;
the supporting parts are at least partially accommodated in the through via, and the end facing away from the bracket in the radial direction abuts against the inner surface of the through via, so that the bracket is stably kept in the housing.

10. The aerosol generating device according to Claim 9, **characterized in that**, the housing comprises a proximal end and a distal end which are opposite along the length direction; wherein the proximal end is provided with a receiving hole through which the smokable material is capable of being received in or removed from the cavity; the distal end is provided with an air inlet for outside air to enter the housing; the through via of the fixing seat is in airflow communication with the air inlet;
the space between the supporting parts forms an airflow channel for outside air to enter the cavity from the through via.
